# EUROPEAN PATENT APPLICATION

(11) **EP 2 511 887 A1**
(43) Date of publication of application: **17.10.2012**
(21) Application number: 11162401.1
(22) Date of filing: 14.04.2011
(51) Int. Cl.: G08B 13/196, H04N 7/18

(54) **Surveillance system set-up.**

(71) Applicant: Axis AB, 223 69 Lund (SE)
(72) Inventor: Hultqvist, Sebastian, SE-217 43, MALMÖ (SE)
(74) Representative: Valea AB

(57) **Abstract**

Control of configuration of a digital video surveillance system is described. The system comprises a plurality of digital video cameras connected in a network with the control station. A method comprises a number of procedures including establishing a respective initial connection (201, 202, 203) between at least a subset of the plurality of cameras and the control station. The initial connections comprise reception (204) of a respective video stream from the connected cameras. The respective video stream from each connected camera is displayed (205) in a user interface of the control station. A selection of a video stream is detected (206, 207) in the user interface and, in response to the detection, an initial configuration procedure (208) is executed with respect to the camera that provides the selected video stream. The initial configuration procedure comprises setting at least one operational parameter associated with the camera to an initial value.

## Description

### Technical field

The present invention relates to controlling configuration of a digital video surveillance system.

### Background

Digital video surveillance systems have many advantages over previous analog systems. For example digital systems are more robust to signal interference, they are more flexible in that they can be adapted to different communication infrastructures, small scale as well as large scale, low bandwidth as well as high bandwidth etc. Digital systems are typically also easier and cheaper to manufacture than previous analog systems.

Nevertheless, as in many other fields of digital communication, an increased flexibility and adaptability to different environments has resulted in that typical digital video surveillance systems are very complex, not least during set-up and configuration.

When setting up a digital video surveillance system, a typical procedure is that the cameras of the system are found in a discovery process and listed and presented to a user in a client computer user interface. Camera identification parameters such as serial number and network address are usually presented in a tabular format for the user, and the user selects the cameras of interest for his or her surveillance system from this, usually very detailed and hence very complex, table. In surveillance systems for professional users this table or list of cameras is normally not a problem to work with; network addresses, e.g. IP addresses, and serial numbers are common parameters for identifying cameras for this group of professional users. Some systems allow an operator to obtain snapshot pictures during such set-up procedures.

However, when considering relatively small systems of, e.g., less than 20 cameras, a situation that is typical for small businesses and private users, the users are commonly not experienced and certainly not trained professionally for installing surveillance systems. Consequently, for this category of users there is an apparent need for simplified and user-friendly installation and set-up.

### Summary

In order to at least mitigate the drawbacks of prior art video surveillance systems as discussed above, there is provided a method in a control station for controlling configuration of a digital video surveillance system. The system comprises a plurality of digital video cameras connected in a network with the control station. The method comprises a number of procedures including establishing a respective initial connection between at least a subset of the plurality of cameras and the control station. The initial connections comprise reception of a respective video stream from the connected cameras. The respective video stream from each connected camera is displayed in a user interface of the control station. A selection of a video stream is detected in the user interface and, in response to the detection, an initial configuration procedure is executed with respect to the camera that provides the selected video stream. The initial configuration procedure comprises setting at least one operational parameter associated with the camera to an initial value.

The establishing of the initial connections between the at least a subset of the plurality of cameras and the control station may comprise reception of a respective video stream having a level of quality that is lower than a nominal quality level of respective video stream.

The solution can, for example, be embodied in that the establishing of the initial connection between the at least a subset of the plurality of cameras and the control station comprises broadcasting a request for connection with the cameras, receiving, in response to the request, information from at least one camera, the information comprising a network address for respective responding camera, sending, to each responding camera, a request for providing a video stream from respective responding camera to the control station, and receiving, in response to the request, a respective video stream from each responding camera.

In other words, such solutions reduce the complexity for a non-professional operator when performing initial configuration, i.e. during installation, of a surveillance system. By removing the need to consider camera addresses, such as IP addresses and serial numbers, the presented solution simplifies the identification of the cameras by showing live video from each camera. The live video can, for example, be displayed in a smaller format (with a low spatial resolution and/or low frame rate), making it possible to simultaneously display a plurality of camera views in a user interface identifying the cameras that are connected in the system.

Furthermore, enabling the user to see live camera views helps the user to identify the cameras. That is, live video simplifies installation and set-up of a surveillance system in that it makes it possible for the user (or any other person) to appear in front of each camera and thereby identify the separate cameras. This is a useful feature in surveillance systems where the environments visible in the camera views from different cameras are very similar, for example corridors, shelves in stores etc. This also enables the user to adjust the camera view before even completing the installation of the cameras.

In another aspect there is provided a computer program product comprising software instructions that, when executed in a processing unit, performs the method as summarized above.

In yet another aspect there is provided a control station for controlling configuration of a digital video surveillance system. The system comprises a plurality of digital video cameras connected in a network with the control station. The control station comprises processing and communication circuitry configured to establish a respective initial connection between at least a subset of the plurality of cameras and the control station. The initial connections comprise reception of a respective video stream from the connected cameras. The circuitry is configured to display, in a user interface of the control station, the respective video stream from each connected camera, detect, in the user interface, a selection of a video stream, and execute, in response to the detection, an initial configuration procedure with respect to the camera that provides the selected video stream. The initial configuration procedure comprises setting at least one operational parameter associated with the camera to an initial value.

In yet another aspect there is provided a digital video surveillance system comprising a control station as summarized above and a plurality of digital video cameras. These further aspects provide effects and advantages corresponding to those of the method as summarized above.

### Brief description of the drawings

Embodiments will now be described with reference to the attached drawings, where:
figure 1 schematically illustrates a video surveillance system,
figure 2 is a flowchart of a method of controlling configuration of a video surveillance system such as the system in figure 1,
figure 3a is a schematically illustrated first view of a user interface in a control station, and
figure 3b is a schematically illustrated second view of a user interface in a control station.

### Detailed description of embodiments

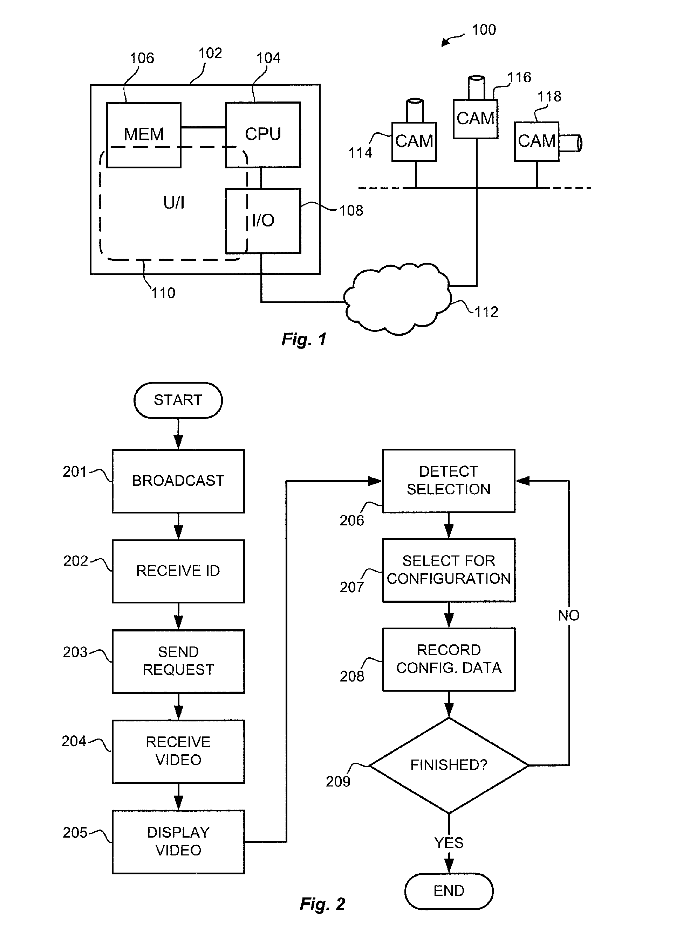

With reference to figure 1, a video surveillance system 100 comprises a control station 102 and a number of digital video cameras 114, 116, 118 interconnected in a digital communication network 112.

The control station 102 comprises, from a hardware perspective, a processing unit 104, memory 106 and input/output circuitry 108. Software instructions stored in the memory 106 are configured to control the station 102 and its interaction with the system 100 and implement, when executed by the processor and in combination with the hardware units, a user interface 110. The user interface includes a display for displaying video data and other information to an operator. The skilled person will realize that the user interface 110 may include other input/output units, including keypads, keyboards, loudspeakers etc that enable an operator of the control unit 102 to interact with the surveillance system 100.

The network 112 is of a type suitable for communicating digital video data and signaling information between the control station 102 and the cameras 114, 116, 118. For example, the network 112 may be any combination of local area networks and wide area networks that are configured to convey digital data according to any suitable network protocols known in the art, such as the Internet Protocol (IP) suite. The cameras 114, 116, 118 may be any suitable digital camera capable of generating video sequences and communicating the video sequences, or other type of image data, such as image and video meta data, over the network 112 to the control station 102. The cameras 114, 116, 118 comprise a lens system for collecting incident light, an image sensor, for example in the form of a Charge Coupled Device (CCD), a CMOS-sensor or similar sensor, for registering incident light, as well as circuitry as is known in the art (and therefore not illustrated in detail in figure 1). For example, the circuitry typically includes an image processing module (implemented in hardware, software, or any combination thereof), an image/video encoder, a processing unit that manages, for example video analytics, memory, and a network interface for connection to the network 112. The image/video encoder is arranged to encode captured digital image data into any one of a plurality of known formats for continuous video sequences, for limited video sequences, for still images or for streamed images/video. For instance, the image information may be encoded into MPEG1, MPEG2, MPEG4, H.264, JPEG, M-JPEG, bitmapped, etc.

Turning now to figure 2, a method in a control station, such as the control station 102 in figure 1, will be described in some detail. The method implements configuration of a digital video surveillance system as summarized above in a number of steps, and commences with a connection establishing sequence during which a respective initial connection is established between at least a subset of the plurality of cameras and the control station, the initial connections comprising reception of a respective video stream from the connected cameras. This sequence is embodied by a broadcasting step 201 in which a request for connection with the cameras is broadcast across the network 112. Any camera or cameras that accept the request will then send a response to the control station. The response is received in a reception step 202 during which information from the camera or cameras is received, the information comprising a network address for respective responding camera. It is to be noted that any processing in the camera of the request from the control station is outside the scope of the present disclosure. A request is then sent, in a request step 203, to the responding cameras for providing a video stream from respective responding camera to the control station. In response to this request, a respective video stream from each responding camera is received in a reception step 204.

During a displaying step 205, the respective video stream from each connected camera is displayed in a user interface of the control station.

An operator of the control station is observing the user interface with its displayed video streams and decides at some point in time to select a camera for configuration. The actual decision by the operator may be based on his/her recognition of the content of the displayed video stream. For example, the operator himself/herself or any other person may appear in front of a camera and thereby identify the camera for which configuration is to take place. This is advantageous in view of prior art systems where snapshot pictures are used. The simple fact that no snapshot action needs to be done by the, typically unskilled, operator is advantageous. That is, if a snapshot picture is to be obtained by an explicit operator action (as is typically the case in prior art systems), constant communication between the operator and his/her partner is necessary in order to establish exactly when the snapshot is to be obtained. Furthermore, as video streams are displayed instead of still pictures, if the person in front of the camera that is about to be selected moves about, the movement will easily catch the attention of the operator and thereby making the selection prior to the initial configuration processes faster.

This procedure is embodied in a detection step 206 during which operator triggered actions are detected. Triggering actions include, as the skilled person will realize, pressing of a keypad key, mouse click, touch on a touch screen (in situations where the user interface includes a touch sensitive screen) etc. A selection is then made in a selection step 207 of the camera corresponding to the detection in the detecting step 206.

In response to the detection of the operator action, an initial configuration procedure is executed in an execution step 208, with respect to the camera that provides the selected video stream. This initial configuration procedure comprises setting at least one operational parameter associated with the camera to an initial value. For example, an identifier such as a name of the camera or a name of the location of the camera can be set during the initial configuration procedure. Other configuration parameters include username/password, specification of where to store recorded video content, addresses to other servers such as dns and ntp servers.

The sequence of detecting operator actions that select video streams and the configuration procedure for the selected cameras is repeated any number of times as illustrated with a decision step 209, during which any terminating action by the operator is detected and decided upon.

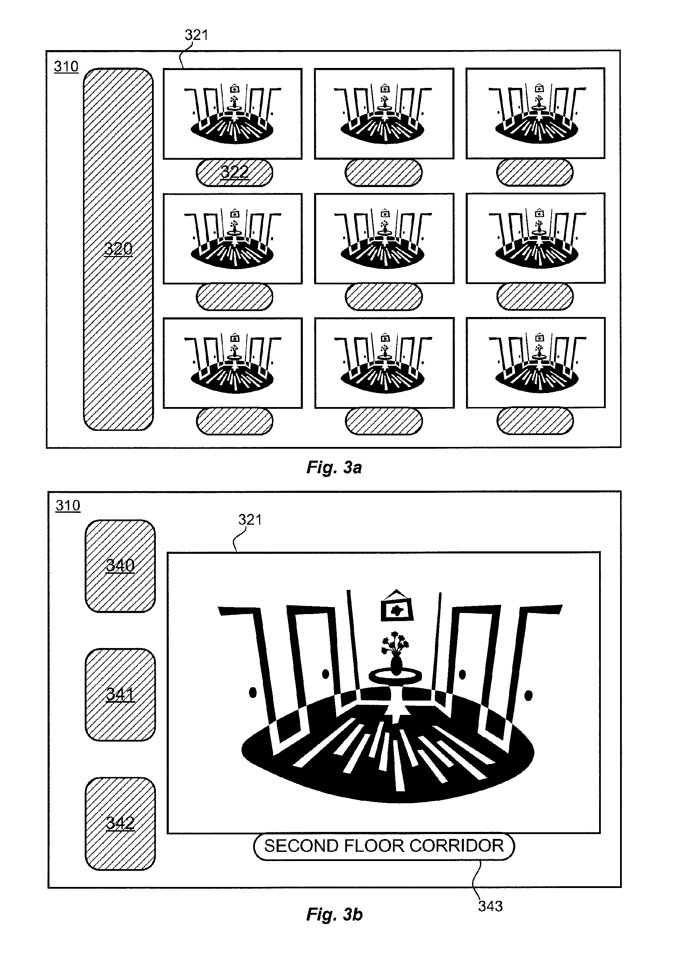

Figures 3a and 3b illustrate, schematically, the appearance of a user interface 310 on a display of a computer apparatus that acts as a control station for a surveillance system during execution of the method described above, for example the control station 102 and the system 100 in figure 1. Figure 3a illustrates a situation corresponding to a point in time when the respective video stream from each connected camera is displayed. In the example of figure 3a, it is assumed that nine cameras are located in nine different corridors in a hotel and the corresponding nine video streams are displayed as exemplified with reference numeral 321. Each video stream has an associated label having undefined content at this point in time, only one of which is illustrated by reference numeral 322.

The operator has ordered an assistant to stand and/or move in front of the camera located in the second floor corridor of the hotel. When observing the user interface 310 as shown in figure 3a, the operator will notice in which video stream the assistant appears and the operator performs the actions that result in selection of one of the video streams 321. Here, it is assumed that the operator sees the assistant in video stream 321 and performs an action that results in a selection of video stream 321, for example by pointing a cursor and clicking using a mouse. An additional interaction field 320 is also displayed in the user interface 310, in which the operator may interact with the control unit using interaction elements in a displayed user interface. The contents and placement of the interaction field 320 is not essential to the present disclosure and the skilled person will readily design the interaction field 320 in an appropriate manner when implementing the teachings of this disclosure.

Figure 3b illustrates a situation corresponding to a point in time when an initial configuration procedure is executed in respect of the camera that provides the selected video stream 321. The selected video stream 321 is displayed together with interaction fields 340, 341, 342. Here it is assumed that the operator has interacted with the user interface 310 in such a way that a caption 343 has been associated with the selected video stream 321. In this case, the operator has chosen to record a simple name label to the camera located in the second floor corridor of the hotel. Other configuration parameters may be configured, for example via the interaction fields 340, 341, 342.

In summary, the procedures described above realize a typical initial "out-of-the-box" configuration of a surveillance system. However, it is to be noted that even if one or more of the components of the surveillance system have been in operation in a previous configuration, it is possible to control initial configuration according to the above described procedures.

## Claims

1. A method in a control station (102) for controlling configuration of a digital video surveillance system (100), the system comprising a plurality of digital video cameras (114, 116, 118) connected in a network (112) with the control station, the method comprising:
- establishing a respective initial connection (201, 202, 203) between at least a subset of the plurality of cameras and the control station, the initial connections comprising reception (204) of a respective video stream from the connected cameras,
- displaying (205), in a user interface (110, 310) of the control station, the respective video stream from each connected camera,
- detecting (206), in the user interface, a selection (207) of a video stream, and
- executing, in response to the detection, an initial configuration procedure (208) with respect to the camera that provides the selected video stream, the initial configuration procedure comprising setting at least one operational parameter associated with the camera to an initial value.

2. The method of claim 1, wherein the establishing of the initial connections between the at least a subset of the plurality of cameras and the control station comprises reception of a respective video stream having a level of quality that is lower than a nominal quality level of respective video stream.

3. The method of claim 1 or 2, wherein the establishing of the initial connection between the at least a subset of the plurality of cameras and the control station comprises:
- broadcasting (201) a request for connection with the cameras,
- receiving (202), in response to the request, information from at least one camera, the information comprising a network address for respective responding camera,
- sending (203), to each responding camera, a request for providing a video stream from respective responding camera to the control station,
- receiving (204), in response to the request, a respective video stream from each responding camera.

4. The method of claim 3 when depending on claim 2, wherein the broadcasting of a request for connection with the cameras comprises broadcasting a request for reception of a video stream having a level of quality that is lower than a nominal quality level.

5. A computer program product comprising software instructions that, when executed in a processing unit, performs the method according to any of claims 1 to 4.

6. A control station (102) for controlling configuration of a digital video surveillance system (100), the system comprising a plurality of digital video cameras (114, 116, 118) connected in a network (112) with the control station, the control station comprising processing and communication circuitry (104, 106, 108) configured to:
- establish a respective initial connection (201, 202, 203) between at least a subset of the plurality of cameras and the control station, the initial connections comprising reception (204) of a respective video stream from the connected cameras,
- display (205), in a user interface (110, 310) of the control station, the respective video stream from each connected camera,
- detect (206), in the user interface, a selection (207) of a video stream, and
- execute, in response to the detection, an initial configuration procedure (208) with respect to the camera that provides the selected video stream, the initial configuration procedure comprising setting at least one operational parameter associated with the camera to an initial value.

7. A digital video surveillance system (100) comprising a control station (102) according to claim 6 and a plurality of digital video cameras (114, 116, 118).
